(19) **Europäisches Patentamt**
**European Patent Office**
**Office européen des brevets**

(11) **EP 3 876 611 B1**

(12) **EUROPEAN PATENT SPECIFICATION**

(45) Date of publication and mention
of the grant of the patent:
**18.06.2025 Bulletin 2025/25**

(21) Application number: **18938469.6**

(22) Date of filing: **01.11.2018**

(51) International Patent Classification (IPC):
*H04W 56/00* (2009.01)   *H04W 92/04* (2009.01)
*H04W 92/08* (2009.01)   *H04W 92/10* (2009.01)

(52) Cooperative Patent Classification (CPC):
**H04W 56/0015; H04W 92/10**

(86) International application number:
**PCT/JP2018/040777**

(87) International publication number:
**WO 2020/090096 (07.05.2020 Gazette 2020/19)**

(54) **BASE STATION, USER EQUIPMENT AND TRANSMISSION METHOD**

BASISSTATION, BENUTZERGERÄT UND ÜBERTRAGUNGSVERFAHREN

STATION DE BASE, ÉQUIPEMENT UTILISATEUR ET PROCÉDÉ DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.09.2021 Bulletin 2021/36**

(73) Proprietor: **NTT DOCOMO, INC.**
**Chiyoda-ku**
**Tokyo 100-6150 (JP)**

(72) Inventors:
• **UCHINO, Tooru**
**Tokyo 100-6150 (JP)**
• **MIN, Tianyang**
**Tokyo 100-6150 (JP)**
• **TAKAHASHI, Hideaki**
**Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
**US-A1- 2017 346 685     US-A1- 2018 249 434**

• **NOKIA ET AL.: "TSN Time Synchronization",
3GPP TSG SA WG2 MEETING #129, S 2- 1810435,
19 October 2018 (2018-10-19), XP051539413,
Retrieved from the Internet <URL:http://
www.3gpp.org/ftp/tsg_sa/WG2_Arch/
TSGS2_129_Dongguan/Docs/S2-1810435.zip>
[retrieved on 20181221]**
• **NOKIA ET AL.: "Synchronization", 3GPP TSG SA
WG2 MEETING #128-BIS, S 2-188103, 24 August
2018 (2018-08-24), XP051537042, Retrieved from
the Internet <URL:http://www.3gpp.org/ftp/
tsg_sa/WG2_Arch/
TSGS2_128BIS_Sophia_Antipolis/Docs/
S2-188103.zip> [retrieved on 20181221]**
• **MEDIATEK INC.: "TSN InterworRing in 5G
System", 3GPP TSG-RAN WG2 MEETING #103-
BIS, R2-1813967, 12 October 2018 (2018-10-12),
XP051523432, Retrieved from the Internet
<URL:http://www.3gpp.org/ftp/TSG_RAN/
WG2_RL2/TSGR2_103bis/Docs/R2-1813967.zip>
[retrieved on 20181221]**

**Description**

TECHNICAL FIELD

The present invention relates to a terminal and a transmission method in a radio communication system.

BACKGROUND ART

In 3GPP (3rd Generation Partnership Project), a study has been progressed for a radio communication method called NR (New Radio) or 5G in order to further increase capacity of a system, further increase a data transmission rate, and further reduce latency in a radio section (e.g., Non-Patent Document 1). For NR, various radio technologies have been studied in order to meet the requirement of achieving throughput of 10 Gbps or more and reducing the latency of the radio section to be less than or equal to 1 ms.

Currently, in 3GPP Release 16, TSN (Time Sensitive Networking) /URLLC has been discussed. URLLC aims to achieve high reliability and low-latency communication (Ultra-Reliable and Low-Latency Communication).

URLLC mainly targets services such as traffic control and remote control that require both high reliability and low latency. Examples of URLLC use cases include automobile driving control and traffic control; robot control and 3D connection with a drone or the like; and remote surgery.

All of the above-described use cases require high reliability and low latency, and it is assumed that the radio systems used therein are used mainly for the exchange of control signals. Accordingly, in 5G, strict conditions on reliability, low latency, and mobility are required for URLLC, instead of requiring a high transmission rate and multiple terminal connections.

In 3GPP, for URLLC, the following are set as specific target values to be achieved: radio section latency of less than or equal to 1 ms; and a packet reception success probability of greater than or equal to 99.999% when 32 bytes of packets are transmitted.

In New Radio (NR), a plurality of mutually different types of Orthogonal Frequency Division Multiplexing (OFDM) subcarrier spacing (15, 30, 60, 120, 240 kHz) is adopted, as a technique for meeting the requirements of URLLC. By using large subcarrier spacing, such as 240 kHz, a frequency bandwidth per subcarrier is increased, and the same amount of information can be transmitted in a shorter time. As a result, a transmission time of a radio signal can be reduced, and the latency can be reduced.

Related Art Document

[Non-Patent Documents]

Non-Patent Document 1: 3GPP TR 22.804 V16.1.0 (2018-09)
Non-Patent Document 2: 3GPP TSG-RAN WG2 Meeting #103-Bis, R2-1813967, Chengdu, China, 8th-12th, October 2018
NOKIA et al.: "TSN Time Synchronization", 3GPP TSG SA WG2 Meeting #129, S 2- 1810435, 19 October 2018 relates to TSN Time Synchronization aspects.

[Patent Documents]

US 20170346685 A1 relates to an apparatus for configuring uplink and downlink carriers. A UE determines according to received uplink and downlink carrier configuration signaling, the pairing between the uplink and downlink carriers, and/or a timing reference downlink carrier for the uplink, and/or a pathloss reference cell for the uplink.

US 20180249434 A1 relates to a method and apparatus for transmitting a synchronization signal for Device-to-Device (D2D) communication in a wireless communication system. With respect to a D2D synchronization source to transmit a synchronization signal for D2D communication, the method includes generating a D2D Synchronization Signal (D2DSS) and transmitting, by a synchronization source, the D2DSS to a D2D reception (Rx) UE.

SUMMARY OF THE INVENTION

[PROBLEM TO BE SOLVED BY THE INVENTION]

Currently, in 3GPP, interworking between a 5G system and a TSN introduced in a factory or the like has been studied.

It is assumed that multiple independent reference times are maintained in multiple factories. However, with current broadcast information specified in 3GPP, a 3GPP network is allowed to signal only information of single common time to user equipment.

There is a need for a technique that allows, in a 3GPP network, the 3GPP network to signal at least one reference time other than its own reference time to user equipment.

[MEANS FOR SOLVING THE PROBLEM]

The object of the invention is achieved by the subject-matter of the independent claims. Advantageous embodiments are defined in the dependent claims. Further examples are provided for facilitating the understanding of the invention.

[ADVANTAGE OF THE INVENTION]

According to an embodiment of the present invention, there is provided a technique that allows, in a 3GPP network, the 3GPP network to signal at least one reference time other than the reference time maintained by the 3GPP network itself to user equipment.

BRIEF DESCRIPTION OF DRAWINGS

FIG. 1 is a diagram illustrating an example of a requirement on an accuracy of synchronization;
FIG. 2 is a diagram illustrating an example of a time synchronization process;
FIG. 3 is a diagram illustrating an example of a transparent approach;
FIG. 4 is a diagram illustrating an example of a black box approach;
FIG. 5 is a diagram illustrating an example of a configuration of a network system;
FIG. 6 is a diagram illustrating an example of broadcast information;
FIG. 7 is a diagram illustrating an example of a reference time transmission process;
FIG. 8 is a diagram illustrating an example of a functional configuration of user equipment 10.
FIG. 9 is a diagram illustrating an example of a functional configuration of a base station 20; and
FIG. 10 is a diagram illustrating an example of a hardware configuration of the user equipment 10 and the base station 20.

[EMBODIMENTS OF THE INVENTION]

In the following, embodiments of the present invention (the embodiment) are described with reference to the drawings. Note that the embodiments described below are merely examples, and embodiments to which the present invention is applied are not limited to the following embodiments.

A radio communication system in the following embodiments is basically assumed to conform to NR. However, this is an example, and the radio communication system in the embodiment may conform, in part or in whole, to a radio communication system other than NR (e.g., LTE).

Currently, in 3GPP, interworking between a 5G system and a TSN introduced in a factory or the like has been studied.

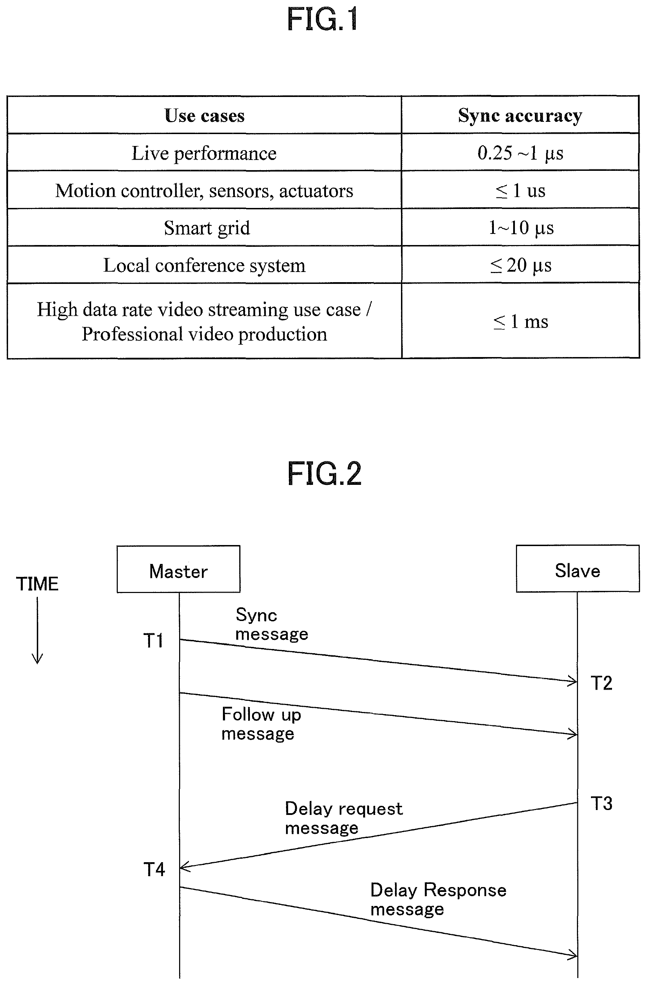

As described in Non-Patent Document 2, currently, implementation of interworking between a TSN and a 5G system of 3GPP has been studied. In Non-Patent Document 2, as a method of implementing interworking between the TSN and the 5G system of 3GPP, two methods have been studied, one called a transparent approach and the other called a black box approach. In the following, outlines of the transparent approach and the block box approach are described. The following transparent approach and the black box approach assume time synchronization processing between a master clock and a slave clock specified in the Precision Time Protocol (PTP). Accordingly, first, an outline of the PTP time synchronization process is described with reference to FIG. 2.

Fig. 2 is a diagram illustrating an example of time synchronization processing between a master clock and a slave clock. As illustrated in FIG. 2, four types of timestamps are exchanged between the master and the slave, which are individually referred to as T1, T2, T3, and T4. These timestamps are required for an offset calculation of the slave clock.

The first timestamp T1 is an exact time at which a Sync message was sent from the master. The time at which the Sync message is transmitted at an Ethernet port is denoted as T1. T1 is transmitted from the master to the slave using a follow-up message.

The second timestamp T2 is an exact time at which the slave receives the Sync message.

The third timestamp T3 is an exact time at which a Delay Request message is transmitted from the slave.

The fourth timestamp T4 is an exact time at which the master receives the Delay Request message from the slave. T4 is transmitted to the slave using a Delay Response message.

Here, it is assumed that a propagation delay from the master to the slave is assumed to be equal to a propagation delay from the slave to the master (the link is symmetric). In this case, an offset between a time maintained by the clock of the slave and a time maintained by the clock of the master can be calculated as follows.

```
      Offset
    = (Time maintained by the clock of the slave) -
  (time maintained by the clock of the master)
      = T2-T1-(the propagation delay from the master
  to the slave)
      = T2-T1-((T2-T1)+(T4-T3))/2
      = ((T2-T1)-(T4-T3))/2.
```

In the calculation of the above-described offset, the link is assumed to be symmetric. If the link is asymmetric, ((T2-T1)+(T4-T3)/2 is an average of the propagation delay from the master to the slave and the propagation delay from the slave to the master.

Since (Time maintained by the clock of the master) = (the time maintained by the clock of the slave) - offset, the time synchronization between the master clock and the slave clock can be achieved by calculating the above-described offset.

Next, an outline of the transparent approach shown in Non-Patent Document 2 is described.

(Transparency Approach)

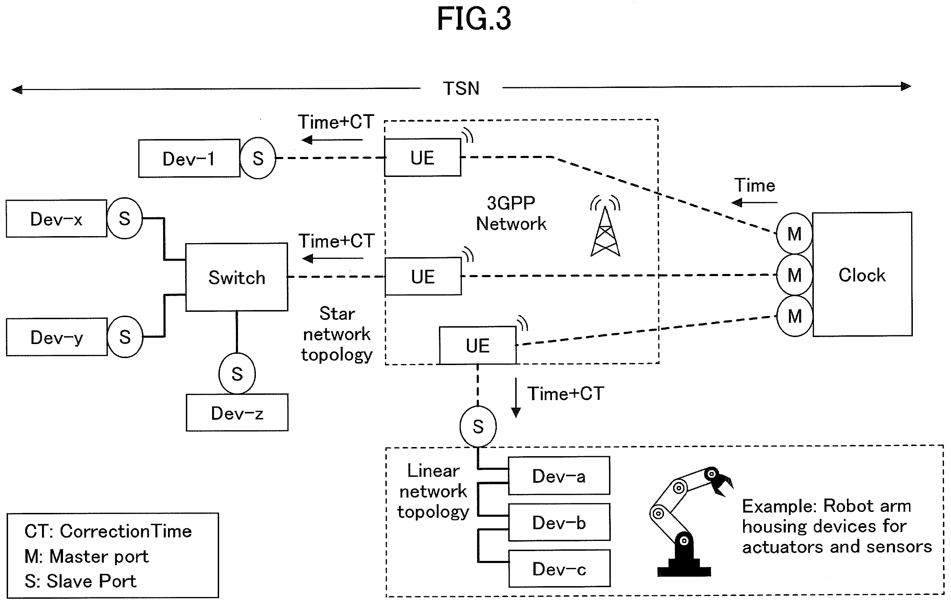

In this method, the user equipment receives a plurality of Precision Time Protocol (PTP) packets through radio, including an accurate reference time, and the received plurality of PTP packets are transferred to all devices connected to an Ethernet port of the user equipment. As illustrated in FIG. 3, several master ports (indicated by M) of the clock source need to be mapped to slave ports (indicated by S) of multiple devices.

In this case, the 3GPP system serves as a "transparent switch" in the IEEE, and the "transparent switch" updates the "correction Time (CT)" header field of the PTP packet in the direction from the master to the slave and in the direction from the slave to the master. The user equipment (UE) and the base station (gNB) are required to update the CT to include the time that the PTP packet is held in the UE/gNB (which is referred to as "residence time"). In order to meet the 1 microsecond requirement for time synchronization, the residence time is to be updated in the PTP packet at the time of transmission.

Here, in the transparent approach, a detailed packet inspection is required to update the "correctionTime" field just before a PTP packet is forwarded in the uplink traffic and the downlink traffic. For performing accurate CT update, PTP packets are required to be prioritized so that they are transmitted with known delays. Furthermore, latency by HARQ retransmission and a propagation delay with radio need to be considered for updating the CT, and the estimated CT becomes uncertain.

Accordingly, due to the uncertainty of the residence time, the transparent approach is unable to achieve the synchronization accuracy of less than 1 microsecond.

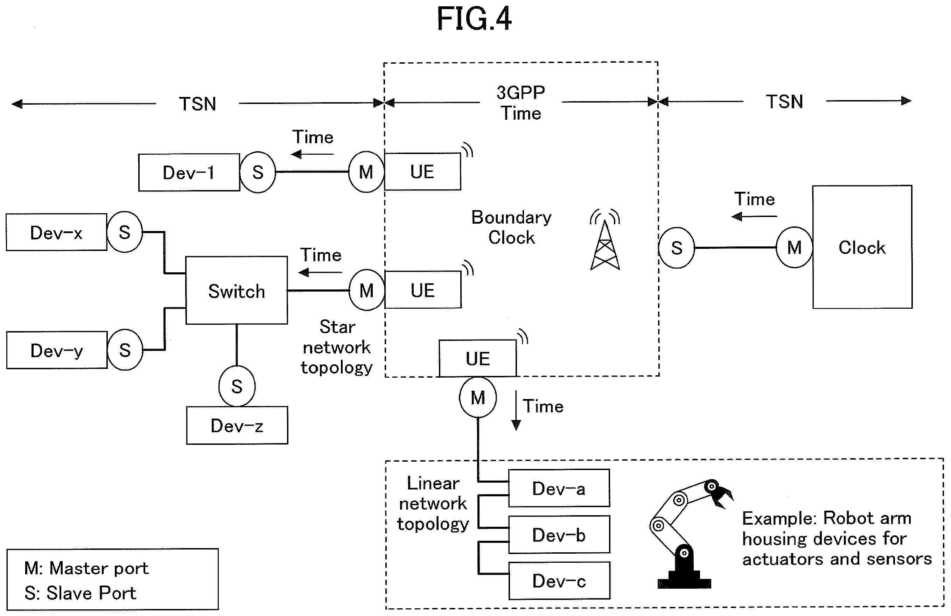

Next, an outline of the black box approach is described with reference to FIG. 4.

In this approach, as illustrated in FIG. 4, a TSN provides an accurate reference time to a 5G system of 3GPP. The 5G system of 3GPP serving as a black box corresponds to the "Boundary Clock (BC)" in IEEE and serves as a master clock for all connected nodes. A reference time maintained by user equipment is delivered as PTP packets to all devices connected to an Ethernet port.

In a black box method, the precise time obtained from the TSN can be delivered by the 5G system of 3GPP to all units of user equipment connected to the 5G system of 3GPP. The black box approach may achieve 1 microsecond synchronization accuracy.

Furthermore, in the black box approach, the 3GPP system is independent of the IEEE system and the 3GPP system can maintain accurate time within the 3GPP system.

(Problems)

In FIG. 4, a reference time is provided from one master clock to a base station of a 3GPP system. In practice, however, a base station of the 3GPP system is assumed to receive multiple reference times by connecting to multiple systems (multiple master clocks) having different clocks.

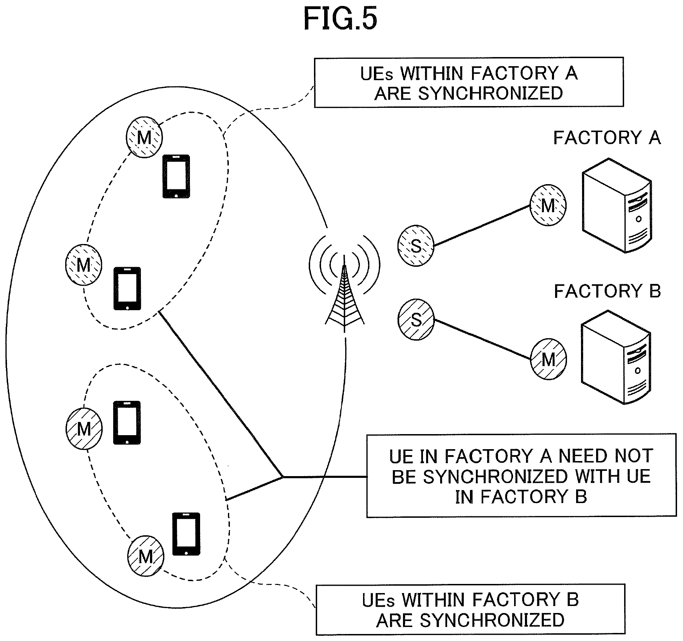

For example, as illustrated in FIG. 5, it is assumed that systems of multiple factories (Factories A and B in FIG. 5) exist, and each factory provides a reference time from its own master clock. Here, in the example of FIG. 5, the number of factory systems is two. However, the number of factory systems is not limited to two. The number of factory systems may be one, or the number of factory systems may be greater than or equal to three. In the situation illustrated in FIG. 5, a case is assumed in which units of user equipment 10 belonging to different factory systems are provided with reference times from different master clocks. Namely, the user equipment 10 belonging to a factory A is provided with a reference time from a master clock of the factory A, and the user equipment 10 belonging to a factory B is provided with a reference time from a master clock of the factory B. In this case, time synchronization is established among multiple units of the user equipment 10 in factory A. Additionally, time synchronization is established among multiple units of the user equipment 10 in factory B. However, time synchronization need not be established between the user equipment 10 in the factory A and the user equipment 10 in the factory B.

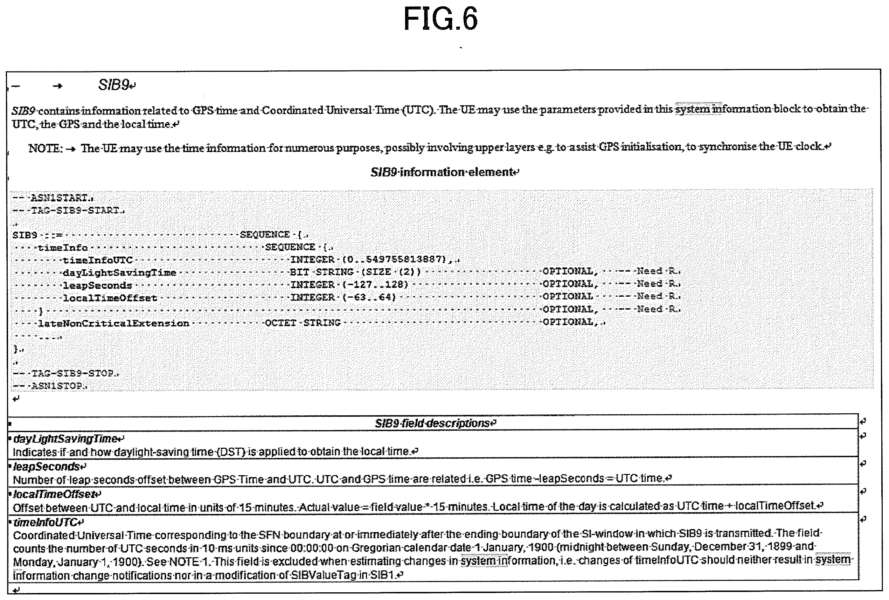

In Release 15 NR, similar to LTE, time information is specified as broadcast information. FIG. 6 is a diagram illustrating a system information block (SIB9), as broadcast information indicating time information.

As illustrated in FIG. 6, in the current broadcast information, the 3GPP network is allowed to signal only information on single common time to the user equipment 10. Accordingly, if the current broadcast information is to be used, the 3GPP network is unable to signal, to the user equipment 10, a reference time other than the reference time maintained by the 3GPP network.

As a method for solving this problem, a method can be considered in which additional information is signaled from the 3GPP network to the user equipment 10, so that the user equipment 10 can obtain at least one reference time provided by at least one clock other than the reference time maintained by the 3GPP network. In the following, a method 1 and a method 2 are described that are for signaling additional information from the 3GPP network to the user equipment 10.

(Method 1)

In Method 1, the 3GPP network signals, to the user equipment 10, association information defining correspondence between the reference time maintained by the 3GPP network and a reference time of another system. The user equipment 10 that receives the association information compares an identifier of the other system to which the user equipment 10 belongs (e.g., the system of the factory A or the system of the factory B) with an identifier of at least one system included in the received association information, and the user equipment 10 extracts the information for calculating the reference time of the other system to which the user equipment 10 belongs.

The 3GPP network may signal, as the above-described association information, the identifier of the other system and information for calculating the reference time of the other system from the reference time maintained by the 3GPP network. For example, the information for calculating the reference signal of the other system from the reference signal maintained by the 3GPP network may be an offset between the reference time maintained by the 3GPP network and the reference time of the other system.

Alternatively, for example, the information for calculating the reference time of the other system from the reference time maintained by the 3GPP network may be a function for calculating the reference time of the other system with the reference time maintained by the 3GPP network as a variable.

Alternatively, a database including at least one correspondence, among an identifier of another system, the reference time maintained by the 3GPP network, and a reference time of the other system, may be prepared in each of the user equipment 10 and the 3GPP network. The 3GPP network may transmit, as the above-described association information, an identifier indicating one of the above-described at least one correspondences to the user equipment 10, and the user equipment 10 may calculate the reference time of the other system, based on the received identifier.

The association information may be signaled from the 3GPP network to the user equipment 10 as a message of a non-access stratum layer (NAS), or it may be signaled as a message of an access stratum layer (AS), such as an RRC message.

(Method 2)

In Method 2, the 3GPP network identifies the system of the at least one other system (for example, the system of the factory A or the system of the factory B) to which the user equipment 10 (or a PTP endpoint connected to the user equipment 10) belongs, and the 3GPP network signals, to the user equipment 10, association information for the user equipment 10 to calculate a reference time of the identified system.

The 3GPP network (the base station 20) may signal, in advance, at least one identifier for identifying at least one of the other systems. In this case, the 3GPP network may include, in the association information, the identifier of the above-described identified system, and the 3GPP network may transmit the association information to the user equipment 10. The user equipment 10 that receives the association information may identify, based on the identifier included in the association information, the system to which the reference time calculated by the user equipment 10 belongs. In this case, the association information from the base station 20 may be signaled not only by the broadcast information, but also by a dedicated RRC message or the like per user equipment 10 or per UE group.

The above-described identifier may be an identifier of association information; a Network Temporary Identifier (RNTI); a Logical Channel Identifier (LCID); a Resource Block Identifier (RB-ID); an identifier of broadcast information; an identifier of dedicated RRC signaling; a Slicing ID; a PLMN ID; information representing QoS, such as QFI or QCI; an AC (Access Class); or an identifier implicitly identified from frequency and/or time information at which the association information is received. If an identifier or associated information is not signaled by the base station 20, the user equipment 10 may apply a default identifier or default associated information. Furthermore, when multiple reference times are signaled according to requirements on synchronization, information for identifying the different requirements (QoS, QFI, and the like) may be signaled.

Furthermore, as the above-described identifier, an identifier that has already been assigned to the user equipment 10 (e.g. an identifier assigned based on contract information) may be signaled from the base station 20 (or CN). The identifier may be signaled when an identifier of the user equipment 10 is signaled (e.g., RACH Msg3 or Msg 5 (e.g., an RRC setup complete message)) during an initial access, or the like.

The identifier may be exchanged and shared between multiple base stations 20 and CN nodes. The identifier may also be provided with an effective period, and the user equipment may request reallocation of the identifier or extension of the effective period if the effective period of the identifier is to expire. For example, expiration of the effective period may imply a case in which measurement of a time period is started from a timing at which one or more items of valid time information is last received, and the time period exceeds a predetermined value. Furthermore, if an RRC connection or a connection with a CN is disconnected (for example, an RRC connection release or detach), the identifier may be discarded or maintained (an indication from the base station 20 may specify whether it is discarded or maintained). Furthermore, when an identifier is to be changed or updated, in order to avoid discrepancy between the base station 20 (or CN) and the user equipment 10, a handover (reconfigurationWithSync) or disconnection of the RRC connection (RRC connection release) may be executed.

(Operation example)

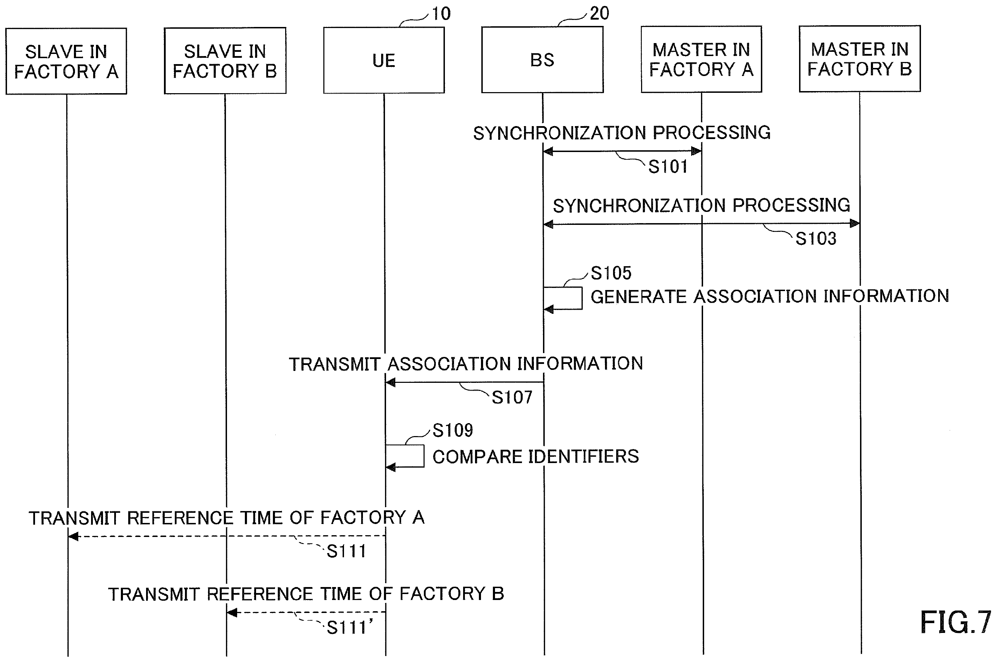

Next, an example of an operation of time synchronization processing according to an embodiment is described with reference to FIG. 7. In step S101, the base station 20 of the 3GPP network executes time synchronization processing with the Master of the factory A that maintains the master clock of the system of the factory A, and the base station 20 obtains a reference time A of the system of the factory A.

In step S103, the base station 20 of the 3GPP network performs time synchronization processing with the Master of the factory B that maintains the master clock of the system of the factory B, and the base station 20 obtains a reference time B of the system of the factory B.

In step S105, the base station 20 generates information A for the user equipment 10 to calculate the reference time A of the system of the factory A and associates the information A with the identifier A of the system of the factory A. In addition, the base station 20 generates information B for the user equipment 10 to calculate the reference time B of the system of the factory B and associates the information B with the identifier B of the system of the factory B. The base station 20 generates association information including the information A for the user equipment 10 to calculate the reference time A of the system of the factory A and the identifier A associated with the information A; and including the information B for the user equipment 10 to calculate the reference time B of the system of the factory B and the identifier B associated with the information B.

In step S107, the base station 20 transmits the generated associated information to the user equipment 10.

In step S109, in response to receiving the association information from the base station 20, the user equipment 10 compares (i) an identifier for identifying the system to which the user equipment 10 belongs (in this example, one of the system of the factory A and the system of the factory B) that is stored by the user equipment 10 with (ii) the identifier included in the received association information, and then the user equipment 10 obtains the information for calculating the reference time of the system to which the user equipment 10 belongs.

For example, suppose that the identifier stored in the user equipment 10 is the identifier A. In this case, the user equipment 10 extracts the information for calculating the reference time A of the system of the factory A from the association information, and the user equipment 10 calculates the reference time A of the system of the factory A.

Subsequently, in step S111, the user equipment 10 transmits the calculated reference time A of the system of the factory A to the slave of the factory A.

In step S109, suppose that the identifier stored in the user equipment 10 is the identifier B. In this case, the user equipment 10 extracts the information for calculating the reference time B of the system of the factory B from the association information, and the user equipment 10 calculates the reference time B of the system of the factory B. Subsequently, in step S111', the user equipment 10 transmits the calculated reference time B of the system of the factory B to the slave of the factory B.

By the above-described processing, time synchronization can be established within the system of the factory A and/or the system of the factory B.

(Device Configurations)

Next, examples of functional configurations of the user equipment 10 and the base station 20 for executing the above-described procedures are described. The user equipment 10 and the base station 20 are provided with all of the functions described in the embodiments. However, the user equipment 10 and the base station 20 may include only some of the functions described in the embodiments. The user equipment 10 and the base station 20 may be collectively referred to as a communication device.

<User equipment>

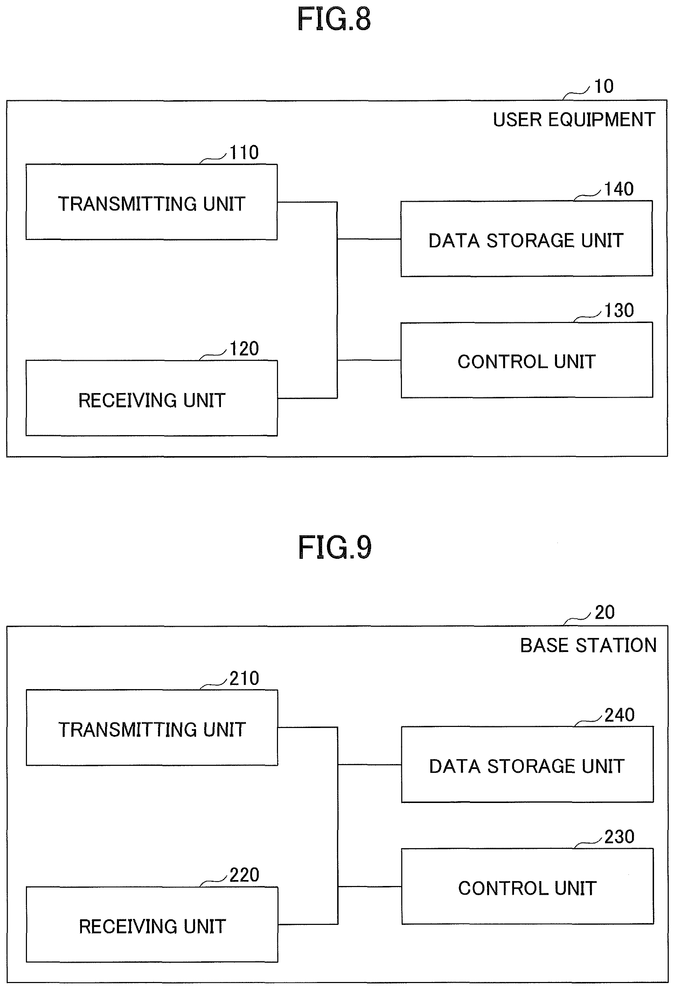

FIG. 8 is a diagram illustrating an example of a functional configuration of the user equipment 10. As illustrated in FIG. 8, the user equipment 10 includes a transmitting unit 110, a receiving unit 120, a control unit 130, and a data storage unit 140. The functional configuration illustrated in FIG. 8 is only one example. The functional division and the names of the functional units may be any division and name, provided that the operation according to the embodiments can be executed. The transmitting unit 110 may be referred to as a transmitter, and the receiving unit 120 may be referred to as a receiver.

The transmitting unit 110 creates a transmission signal from the transmission data and transmits the transmission signal through radio. The transmitting unit 110 may form one or more beams. The receiving unit 120 receives various types of signals through radio and obtains a higher layer signal from the received physical layer signal.

The control unit 130 controls the user equipment 10. The function of the control unit 130 related to the transmission may be included in the transmitting unit 110, and the function of the control unit 130 related to the reception may be included in the receiving unit 120. For example, the configuration information is stored in the data storage unit 140. The configuration information related to the transmission may be stored in the transmitting unit 110, and the configuration information related to the reception may be stored in the receiving unit 120.

For example, the receiving unit 120 receives association information defining a correspondence between a reference time maintained by a 3GPP network and a reference time of another system from the base station 20, and the receiving unit 120 transmits the received association information to the control unit 130. The control unit 130 extracts, from the association information, information for calculating the reference time of the other system to which the user equipment 10 belongs by comparing the identifier of the other system to which the user equipment 10 belongs (e.g., the system of the factory A or the system of the factory B) and the identifier of the at least one system included in the received association information, and then the control unit 130 calculates the reference time of the other system. The control unit 130 causes the transmitting unit 110 to transmit the calculated reference time of the other system.

<Base station 20>

Fig. 9 is a diagram illustrating an example of a functional configuration of the base station 20. As illustrated in FIG. 9, the base station 20 includes a transmitting unit 210, a receiving unit 220, a control unit 230, and a data storage unit 240. The functional configuration illustrated in FIG. 9 is only one example. The functional division and the names of the functional units may be any division and names, provided that the operation according to the embodiments can be executed. The transmitting unit 210 may be referred to as a transmitter, and the receiving unit 220 may be referred to as a receiver.

The transmitting unit 210 includes a function of generating a signal to be transmitted to the user equipment 10 and transmitting the signal through radio. Furthermore, the transmitting unit 210 forms one or more beams. The receiving unit 220 includes a function for receiving various types of signals transmitted from the user equipment 10 and obtaining information of a higher layer, for example, from the received signal. The receiving unit 220 includes a measuring unit that performs measurement of the received signal and obtains the received power, etc.

The control unit 230 controls the base station 20. The function of the control unit 230 related to the transmission may be included in the transmitting unit 210, and the function of the control unit 230 related to the reception may be included in the receiving unit 220. For example, the configuration information is stored in the data storage unit 240. The configuration information related to the transmission may be stored in the transmitting unit 210, and the configuration information related to the reception may be stored in the receiving unit 220.

For example, the receiving unit 220 performs time synchronization processing with another system (e.g., a system of factory A and a system of factory B) to which the user equipment 10 belongs, the receiving unit 220 obtains a reference time of the other system, and the receiving unit 220 transmits the reference signal to the control unit 230. The control unit 230 generates association information by generating information for the user equipment 10 to calculate the reference time of the other system to which the user equipment 10 belongs based on the reference time of the other system and associating the identifier of the other system with the generated information. The control unit 230 transmits the association information to the transmitting unit 210, and the transmitting unit 210 transmits the association information to the user equipment 10.

<Hardware configuration>

The block diagrams (FIG. 8 to FIG. 9) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

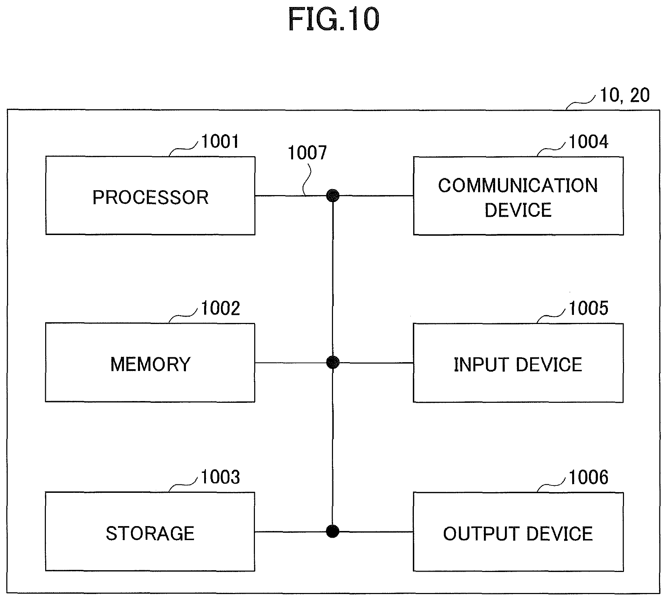

For example, the base station 20, the user equipment 10, or the like in an embodiment of the present invention may function as a computer for performing a process of radio communication method according to the present disclosure. Fig. 10 is a diagram illustrating an example of a hardware configuration of the base station 20 and the user equipment 10 according to an embodiment of the present disclosure. Each of the base station 20 and the user equipment 10 described above may be physically configured as a computer device including a processor 1001, a memory 1002, a storage 1003, a communication device 1004, an input device 1005, an output device 1006, a bus 1007, and the like.

In the following description, the term "device" can be read as a circuit, device, unit, or the like. The hardware configuration of each of the base station 20 and the user equipment 10 may be configured to include each device depicted, or may be configured without including some devices.

Each function in each of the base station 20 and the user equipment 10 is implemented such that predetermined software (program) is read on hardware such as the processor 1001, the memory 1002 and the like, and the processor 1001 performs an operation and controls communication by the communication device 1004 and at least one of reading and writing of data in the memory 1002 and the storage 1003.

For example, the processor 1001 operates an operating system and controls the entire computer. The processor 1001 may be configured with a central processing unit (CPU) including an interface with a peripheral device, a control device, an operation device, a register, and the like. For example, the above-described control unit 130, the control unit 230, and the like may be implemented by the processor 1001.

Furthermore, the processor 1001 reads a program (program code), a software module, data, or the like from at least one of the storage 1003 and the communication device 1004 out to the memory 1002, and executes various types of processes according to them. A program causing a computer to execute at least some of the operations described in the above embodiments is used as the program. For example, the control unit 130 of the base station 20 illustrated in FIG. 8 may be implemented by a control program which is stored in the memory 1002 and operates on the processor 1001. Furthermore, for example, the control unit 230 of the user equipment 10 illustrated in Fig. 9 may be implemented by a control program which is stored in the memory 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the communication method according to an embodiment of the present disclosure.

The storage 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Bluray (registered trademark) disc, a smart card, a flash memory (for example, a card, a stick, or a key drive), a floppy (registered trademark) disk, a magnetic strip, and the like. The storage 1003 is also referred to as an "auxiliary storage device." The above-described storage medium may be, for example, a database, a server, or any other appropriate medium including at least one of the memory 1002 and the storage 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the memory 1002 are connected by the bus 1007 to communicate information with each other. The bus 1007 may be configured with a single bus or may be configured with different buses between the devices.

Furthermore, each of the base station 20 and the user equipment 10 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

(Conclusion of the embodiments)

As described above, according to the embodiments, there is provided a base station including a receiving unit that receives, from an external system, a reference time of the external system; a control unit that generates, based on the reference time of the external system, association information for a user equipment to calculate the reference time of the external system to which the user equipment belongs; and a transmitting unit that transmits the association information to the user equipment.

According to the above-described configuration, the base station can obtain a reference time of an external system other than the reference time maintained by the base station itself from the external system and transmit the reference time to the user equipment. Namely, the communication system formed of the base station and the user equipment can be caused to function as a boundary clock.

The receiving unit may receive, from each external system of a plurality of external systems, a reference time of the external system, and the control unit may generate, for each external system of the plurality of external systems, association information by generating information for the user equipment to calculate the reference time of the external system, by associating the generated information with an identifier of the external system, and by including the generated information and the associated identifier of the external system.

According to the above-described configuration, even if there are multiple external systems, the base station can obtain the reference time of each external system and transmit the information for the user equipment belonging to the external system to calculate the reference time of the external system.

The receiving unit may receive, from each external system of a plurality of external systems, a reference time of the external system and an identifier of user equipment that belongs to the external system, the control unit may generate, for each user equipment of one or more units of user equipment belonging to the base station, association information for the user equipment to calculate a reference time of the external system to which the user equipment belongs, and the transmitting unit may transmit the association information to each user equipment of the one or more units of the user equipment belonging to the base station.

According to the above-described configuration, the base station can determine an external system of a plurality of external systems to which a specific user equipment belongs, and the base station can transmit information for the specific user equipment to calculate a reference time of the external system to which the specific user equipment belongs.

Furthermore, according to the embodiments, there is provided a user equipment including a receiving unit that receives association information for calculating a reference time of an external system; a control unit that calculates the reference time of the external system based on the association information; and a transmitting unit that transmits the calculated reference time.

According to the above-described configuration, the user equipment can obtain information for calculating a reference time of an external system other than the reference time maintained by the base station.

The receiving unit may receive, as the association information, association information including, for each external system of a plurality of external systems, information for the user equipment to calculate a reference time of the external system and an identifier of the external system associated with the information, and the control unit may extract, from the association information, the information for the user equipment to calculate the reference time of the external network to which the user equipment belongs, and the control unit may calculate the reference time of the external network to which the user equipment belongs, by comparing (i) an identifier, the identifier being stored in the user equipment, of the external system to which the user equipment belongs and (ii) an identifier of each external system included in the association information.

According to the above-described configuration, even if there are multiple external systems, the user equipment can obtain information for calculating the reference time of the external system to which the user equipment belongs.

Furthermore, according to the embodiments, there is provided a transmission method including: receiving, from an external system, a reference time of the external system; generating, based on the reference time of the external system, association information for a user equipment to calculate the reference time of the external system to which the user equipment belongs; and transmitting the association information to the user equipment.

According to the above-described configuration, the base station can obtain a reference time of an external system other than the reference time maintained by the base station itself from the external system and transmit the reference time to the user equipment. Namely, the communication system formed of the base station and the user equipment can be caused to function as a boundary clock.


(Supplemental embodiment)


The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent).

The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station 20 and the user equipment 10 have been described using the functional block diagrams, but such devices may be implemented by hardware, software, or a combination thereof. Software executed by the processor included in the base station 20 according to the embodiment of the present invention and software executed by the processor included in the user equipment 10 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4G (4th generation mobile communication system), 5G (5th generation mobile communication system), Future Radio Access (FRA), NR (new Radio), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be reversed in order provided that there is no contradiction. For example, the method

## EP 3 876 611 B1

described in the present disclosure presents elements of various steps with an exemplary order and is not limited to a presented specific order.

In this specification, a specific operation to be performed by the base station 20 may be performed by an upper node in some cases. In the network including one or more network nodes including the base station 20, various operations performed for communication with the user equipment 10 can be obviously performed by at least one of the base station 20 and any network node (for example, an MME, an S-GW, or the like is considered, but it is not limited thereto) other than the base station 20. A case is exemplified above in which there is one network node other than the base station 20. The one network node may be a combination of a plurality of other network nodes (e.g., MME and S-GW) .

Information, a signal, or the like described in the present disclosure may be output from a higher layer (or a lower layer) to a lower layer (or a higher layer layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination in the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in the present disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station device, " "fixed station, " "Node B, " "eNode B (eNB) , " "gNodeB (gNB)," "access point," "transmission point," "reception point," "transmission/reception point," "cell, " "sector, " "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of units of user equipment 10 (for example, which may be referred to as device-to-device (D2D) or vehicle-to-everything (V2X)). In this case, the user equipment 10 may have the functions of the base station 20 described above. Further, the terms "uplink" and "downlink" may be replaced with terms (for example, "side") corresponding to inter-terminal communication. For example, an uplink channel, a downlink channel, or the like may be replaced with side channels.

Similarly, the user terminal in the present disclosure may be replaced with the base station. In this case, the base station may have the functions of the above-mentioned user terminal.

The term "determining" used in this specification may include a wide variety of actions. For example, "determining" may include, for example, events in which events such as judging, calculating, computing, processing, deriving, investigating, looking up, search, and inquiry (for example, looking up in a table, a database, or another data structure), or ascertaining are regarded as "determining." Further, "determining" may include, for example, events in which events such as receiving (for example, receiving information), transmitting (for example, transmitting information), input, output, or accessing (for example, accessing data in a memory) are regarded as "determining." Further, "determining" may include, for example, events in which events such as resolving, selecting, choosing, establishing, or comparing are regarded as "determining." In other words, "determining" may include events in which a certain operation is regarded as "determining." Further, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each user equipment 10) to each user equipment 10 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is provided, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Further, a long TTI (for example, a normal TTI, a subframe, or the like) may be replaced with a TTI having a time length exceeding 1 ms, and a short TTI (for example, a reduced TTI or the like) may be replaced with a TTI having a TTI length that is less than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Further, a time domain of an RB may include one or more symbols and may be a length of one slot, one mini slot, one subframe, or one TTI. One TTI, one subframe, or the like may be formed of one or more resource blocks.

Further, one or more RBs may be referred to as a physical resource block (PRB), a sub carrier group (SCG), a resource element group (REG), a PRB pair, an RB pair, or the like.

Further, the resource block may be formed of one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be

## EP 3 876 611 B1

interpreted similarly to "different."

Each aspect/embodiment described in this specification may be used alone, in combination, or may be switched in accordance with the execution. Further, notification of predetermined information (for example, notification of "being X") is not limited to being performed explicitly, but may be performed by implicitly (for example, not notifying the predetermined information).

Further, in the present disclosure, the DL-SSB is an example of a block including the synchronization signal and the broadcast information in downlink. The SL-SSB is an example of a block including the synchronization signal and the broadcast information in sidelink.

LIST OF REFERENCE SYMBOLS

10 user equipment
110 transmitting unit
120 receiving unit
130 control unit
140 data storage unit
20 base station
210 transmitting unit
220 receiving unit
230 control unit
240 data storage unit
1001 processor
1002 memory
1003 storage
1004 communication device
1005 input device
1006 output device

**Claims**

1. A terminal (10) comprising:

   a receiving unit (120) configured to receive association information for calculating a reference time of an external system from a base station (20);
   a control unit (130) configured to calculate the reference time of the external system based on the association information; and
   a transmitting unit (110) configured to transmit the calculated reference time to a slave in the external system, wherein the association information indicates correspondence between a reference time of a 5G system and the reference time of the external system.

2. The terminal (10) according to claim 1, wherein the receiving unit (120) is configured to receive, as the association information, association information including, for each external system of a plurality of external systems, information for the terminal (10) to calculate the reference time of the external system and a first identifier for identifying the external system, and
   wherein the control unit (130) is configured to extract, from the association information, the information for the terminal (10) to calculate the reference time of the external network to which the terminal (10) belongs, and the control unit (130) is configured to calculate the reference time of the external network to which the terminal (10) belongs, by comparing (i) a second identifier, the identifier being stored in the terminal , for identifying the external system to which the terminal (10) belongs and (ii) each of the first identifiers for identifying respective external systems included in the association information.

3. A communication method executed by a terminal (10), the method comprising:

   receiving association information for calculating a reference time of the external system from a base station (20);
   calculating the reference time of the external system based on the association information; and

transmitting the calculated reference time to a slave in the external system,
wherein the association information indicates correspondence between a reference time of a 5G system and the reference time of the external system.

4. The method of claim 3, wherein the receiving receives, as the association information, association information including, for each external system of a plurality of external systems, information for the terminal to calculate the reference time of the external system and a first identifier for identifying the external system, and
wherein the calculating extracts, from the association information, the information for the terminal to calculate the reference time of the external network to which the terminal belongs, and calculates the reference time of the external network to which the terminal belongs, by comparing (i) a second identifier, the identifier being stored in the terminal, for identifying the external system to which the terminal belongs and (ii) each of the first identifiers for identifying respective external systems included in the association information.

5. A radio communication system comprising: the terminal (10) according to claim 1 and the base station (20) including a transmitting unit (210) configured to transmit the association information to the terminal (10).

**Patentansprüche**

1. Endgerät (10), umfassend:

eine Empfangseinheit (120), die so konfiguriert ist, dass sie Zuordnungsinformationen zum Berechnen einer Referenzzeit eines externen Systems von einer Basisstation (20) empfängt;
eine Steuereinheit (130), die so konfiguriert ist, dass sie die Referenzzeit des externen Systems basierend auf den Zuordnungsinformationen berechnet; und
eine Übertragungseinheit (110), die so konfiguriert ist, dass sie die berechnete Referenzzeit an einen Slave im externen System überträgt,
wobei die Zuordnungsinformationen Entsprechung zwischen einer Referenzzeit eines 5G-Systems und der Referenzzeit des externen Systems angeben.

2. Endgerät (10) nach Anspruch 1, wobei die Empfangseinheit (120) so konfiguriert ist, dass sie als Zuordnungsinformationen Zuordnungsinformationen empfängt, die für jedes externe System einer Vielzahl von externen Systemen Informationen einschließen, damit das Endgerät (10) die Referenzzeit des externen Systems und eine erste Kennung zum Identifizieren des externen Systems berechnet, und
wobei die Steuereinheit (130) so konfiguriert ist, dass sie aus den Zuordnungsinformationen die Informationen extrahiert, damit das Endgerät (10) die Referenzzeit des externen Netzwerks berechnet, dem das Endgerät (10) angehört, und die Steuereinheit (130) so konfiguriert ist, dass sie die Referenzzeit des externen Netzwerks berechnet, dem das Endgerät (10) angehört, durch Vergleichen von (i) einer zweiten Kennung zum Identifizieren des externen Systems, dem das Endgerät (10) angehört, wobei die Kennung im Endgerät gespeichert ist, und (ii) jede der ersten Kennungen zum Identifizieren jeweiliger externer Systeme in den Zuordnungsinformationen eingeschlossen ist.

3. Kommunikationsverfahren, das von einem Endgerät (10) ausgeführt wird, wobei das Verfahren Folgendes umfassend:

Empfangen von Zuordnungsinformationen zum Berechnen einer Referenzzeit des externen Systems von einer Basisstation (20);
Berechnen der Referenzzeit des externen Systems basierend auf den Zuordnungsinformationen; und
Übertragen der berechneten Referenzzeit an einen Slave im externen System,
wobei die Zuordnungsinformationen Entsprechung zwischen einer Referenzzeit eines 5G-Systems und der Referenzzeit des externen Systems angeben.

4. Verfahren nach Anspruch 3, wobei das Empfangen als Zuordnungsinformationen, Zuordnungsinformationen empfängt, die für jedes externe System einer Vielzahl von externen Systemen Informationen einschließen, damit das Endgerät die Referenzzeit des externen Systems und eine erste Kennung zum Identifizieren des externen Systems berechnet, und
wobei das Berechnen aus den Zuordnungsinformationen die Informationen extrahiert, damit das Endgerät die Referenzzeit des externen Netzwerks berechnet, dem das Endgerät angehört, und die Referenzzeit des externen Netzwerks berechnet, dem das Endgerät angehört durch Vergleichen von

(i) einer zweiten Kennung zum Identifizieren des externen Systems, dem das Endgerät angehört, wobei die Kennung im Endgerät gespeichert ist, und (ii) jede der ersten Kennungen zum Identifizieren jeweiliger externer Systeme in den Zuordnungsinformationen eingeschlossen ist.

**5.** Funkkommunikationssystem, umfassend: das Endgerät (10) nach Anspruch 1, und die Basisstation (20), die eine Übertragungseinheit (210) einschließt, die so konfiguriert ist, dass sie die Zuordnungsinformationen an das Endgerät (10) überträgt.

**Revendications**

**1.** Terminal (10) comprenant :

une unité de réception (120) configurée pour recevoir des informations d'association pour calculer un temps de référence d'un système externe à partir d'une station de base (20) ;
une unité de commande (130) configurée pour calculer le temps de référence du système externe sur la base des informations d'association ; et
une unité de transmission (110) configurée pour transmettre le temps de référence calculé à un esclave dans le système externe,
dans lequel les informations d'association indiquent une correspondance entre un temps de référence d'un système 5G et le temps de référence du système externe.

**2.** Terminal (10) selon la revendication 1, dans lequel l'unité de réception (120) est configurée pour recevoir, en tant qu'informations d'association, des informations d'association incluant, pour chaque système externe d'une pluralité de systèmes externes, des informations pour que le terminal (10) calcule le temps de référence du système externe et un premier identifiant pour identifier le système externe, et
dans lequel l'unité de commande (130) est configurée pour extraire, à partir des informations d'association, les informations pour que le terminal (10) calcule le temps de référence du réseau externe auquel appartient le terminal (10), et l'unité de commande (130) est configurée pour calculer le temps de référence du réseau externe auquel appartient le terminal (10), par la comparaison (i) d'un second identifiant, l'identifiant étant stocké dans le terminal, pour identifier le système externe auquel appartient le terminal (10) et (ii) de chacun des premiers identifiants pour identifier des systèmes externes respectifs inclus dans les informations d'association.

**3.** Procédé de communication mis en œuvre par un terminal (10), le procédé comprenant :

la réception d'informations d'association pour calculer un temps de référence du système externe à partir d'une station de base (20) ;
le calcul du temps de référence du système externe sur la base des informations d'association ; et
la transmission du temps de référence calculé à un esclave dans le système externe,
dans lequel les informations d'association indiquent une correspondance entre un temps de référence d'un système 5G et le temps de référence du système externe.

**4.** Procédé selon la revendication 3, dans lequel la réception reçoit, en tant qu'informations d'association, des informations d'association incluant, pour chaque système externe d'une pluralité de systèmes externes, des informations pour que le terminal calcule le temps de référence du système externe et un premier identifiant pour identifier le système externe, et
dans lequel le calcul extrait, à partir des informations d'association, les informations pour que le terminal calcule le temps de référence du réseau externe auquel appartient le terminal, et calcule le temps de référence du réseau externe auquel appartient le terminal, par la comparaison (i) d'un second identifiant, l'identifiant étant stocké dans le terminal, pour identifier le système externe auquel appartient le terminal et (ii) de chacun des premiers identifiants pour identifier des systèmes externes respectifs inclus dans les informations d'association.

**5.** Système de radiocommunication comprenant : le terminal (10) selon la revendication 1 et la station de base (20) incluant une unité de transmission (210) configurée pour transmettre les informations d'association au terminal (10).

# FIG.1

| Use cases | Sync accuracy |
|---|---|
| Live performance | 0.25 ~1 μs |
| Motion controller, sensors, actuators | ≤ 1 us |
| Smart grid | 1~10 μs |
| Local conference system | ≤ 20 μs |
| High data rate video streaming use case / Professional video production | ≤ 1 ms |

# FIG.2

TIME ↓

Master     Slave

T1   Sync message → T2

Follow up message →

Delay request message   T3

T4 ←

Delay Response message →

# FIG.3

TSN

Time+CT

Dev-1 — S ----- UE

3GPP
Network

Dev-x — S
Switch
Dev-y — S

Time+CT

UE

Star
network
topology

Time

M

M    Clock

M

S

Dev-z

UE

Time+CT

S

Linear
network
topology

Dev-a

Dev-b

Dev-c

Example: Robot arm
housing devices for
actuators and sensors

CT: CorrectionTime
M: Master port
S: Slave Port

EP 3 876 611 B1

# FIG.4

TSN ← → 3GPP Time ← → TSN

Time ← Dev-1 — S — M — UE

Dev-x — S

Time ← Switch — M — UE

Dev-y — S

Boundary Clock

Time ← S — M — Clock

Dev-z — S

Star network topology

UE
M
↓ Time

Linear network topology — Dev-a
Dev-b
Dev-c

Example: Robot arm housing devices for actuators and sensors

M: Master port
S: Slave Port

EP 3 876 611 B1

# FIG.5

UEs WITHIN FACTORY A
ARE SYNCHRONIZED

FACTORY A

FACTORY B

UE IN FACTORY A NEED NOT
BE SYNCHRONIZED WITH UE
IN FACTORY B

UEs WITHIN FACTORY B
ARE SYNCHRONIZED

# FIG.6

---

— → *SIB9*

*SIB9* contains information related to GPS time and Coordinated Universal Time (UTC). The UE may use the parameters provided in this system information block to obtain the UTC, the GPS and the local time.

    NOTE: → The UE may use the time information for numerous purposes, possibly involving upper layers e.g. to assist GPS initialisation, to synchronise the UE clock.

*SIB9 information element*

```
-- ASN1START.
-- TAG-SIB9-START.

SIB9 ::=                                          SEQUENCE {
    timeInfo                                      SEQUENCE {
        timeInfoUTC                               INTEGER (0..549755813887),
        dayLightSavingTime                        BIT STRING (SIZE (2))          OPTIONAL,  -- Need R.
        leapSeconds                               INTEGER (-127..128)            OPTIONAL,  -- Need R.
        localTimeOffset                           INTEGER (-63..64)              OPTIONAL,  -- Need R.
    }                                                                            OPTIONAL,  -- Need R.
    lateNonCriticalExtension            OCTET STRING                             OPTIONAL,
    ...
}.

-- TAG-SIB9-STOP.
-- ASN1STOP.
```

| *SIB9 field descriptions* |
|---|
| *dayLightSavingTime* <br> Indicates if and how daylight-saving time (DST) is applied to obtain the local time. |
| *leapSeconds* <br> Number of leap seconds offset between GPS Time and UTC. UTC and GPS time are related i.e. GPS time –leapSeconds = UTC time. |
| *localTimeOffset* <br> Offset between UTC and local time in units of 15 minutes. Actual value = field value * 15 minutes. Local time of the day is calculated as UTC time + localTimeOffset. |
| *timeInfoUTC* <br> Coordinated Universal Time corresponding to the SFN boundary at or immediately after the ending boundary of the SI-window in which SIB9 is transmitted. The field counts the number of UTC seconds in 10 ms units since 00:00:00 on Gregorian calendar date 1 January, 1900 (midnight between Sunday, December 31, 1899 and Monday, January 1, 1900). See NOTE 1. This field is excluded when estimating changes in system information, i.e. changes of timeInfoUTC should neither result in system information change notifications nor in a modification of SIBValueTag in SIB1. |

FIG.7

# FIG.8

# FIG.9

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180249434 A1

**Non-patent literature cited in the description**

- *3GPP TR 22.804 V16.1.0*, September 2018
- *3GPP TSG-RAN WG2 Meeting #103-Bis, R2-1813967*, 08 October 2018
- **NOKIA et al.** TSN Time Synchronization. *3GPP TSG SA WG2 Meeting #129, S 2- 1810435*, 19 October 2018